# DEMANDE DE BREVET EUROPEEN

(11) **EP 1 207 643 A1**
(43) Date de publication de la demande: **22.05.2002**
(21) Numéro de dépôt: 01402800.5
(22) Date de dépôt: 29.10.2001
(51) Int. Cl.: H04J 14/02, H04Q 11/00

(54) **Dispositif de sélection et de conversion longueur d'onde, et matrice de commutation photonique l'incorporant**

(30) Priorité: 13.11.2000 FR 0014531
(71) Demandeur: ALCATEL, 75008 Paris (FR)
(72) Inventeur: Chiaroni, Dominique, 92160 Antony (FR); Le Sauze, Nicolas, 91440 Bures-sur-Yvette (FR); Pons, Alain, 91340 Ollainville (FR); Jourdan, Amaury, 92310 Sevres (FR)
(74) Mandataire: Fournier, Michel

(57) **Abrégé**

Pour réduire les pertes de données optiques multiplexées en longueurs d'onde et commutées dans une matrice de commutation photonique, le dispositif de sélection et de conversion de longueur d'onde comporte :
- des moyens de démultiplexage et de diffusion (DMD) pour prélever d'un signal multiplex d'entrée (Sj) p parties de chacune de ses composantes spectrales (λ1-λn) et former ainsi n.p signaux extraits séparés spatialement,
- associés à chaque composante spectrale (λ1-λn) , p convertisseurs de longueur d'onde (C11-C1p,Cn1-Cnp) ayant une fonction de porte optique recevant les p signaux extraits, et aptes à fournir sélectivement des signaux convertis, et
- des moyens de couplage de sortie (KS) pour combiner les signaux convertis.

Application à la commutation de paquets optiques.

## Description

L'invention se situe dans le domaine des réseaux de transmission optique et plus précisément celui des dispositifs de commutation pour signaux optiques organisés en paquets et multiplexés en longueurs d'onde.

D'une façon générale, les réseaux à commutation de paquets optiques comportent des noeuds munis de dispositifs de commutation rapide de paquets pour aiguiller des groupes de données de taille variable ou fixe, habituellement appelées "paquets" ou "cellules" selon qu'il s'agit respectivement d'un réseau de type Internet ou d'un réseau ATM.

Les matrices de commutation photoniques sont des dispositifs de commutation de type "tout optique" où les données, généralement sous la forme d'une modulation d'amplitude d'une onde porteuse optique, sont aiguillées d'une liaison optique à une autre en conservant leur nature optique, c'est-à-dire sans passer par une conversion dans le domaine électrique. Une des fonctions de ces matrices est d'assurer la synchronisation des paquets, en vue de gérer les conflits de façon à limiter au maximum les pertes de paquets. Si on utilise le multiplexage en longueur d'onde, ci-après désigné par WDM (de l'anglais "Wavelength Division Multiplexing"), les matrices doivent être prévues aussi pour prendre en compte la dimension spectrale des signaux à commuter.

L'invention concerne un dispositif de sélection et de conversion de longueur d'onde utilisable dans ces matrices pour la gestion du multiplexage en longueur d'onde.

L'invention concerne également une matrice de commutation photonique incorporant ce dispositif.

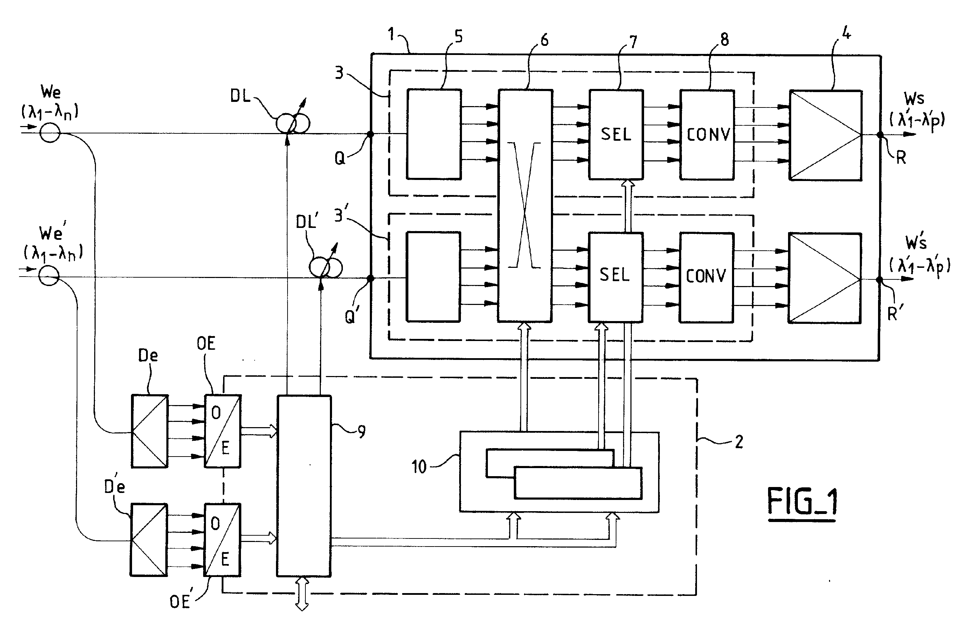

La figure 1 représente un exemple de commutateur optique où l'invention peut s'appliquer.

Le commutateur est essentiellement constitué d'une matrice de commutation photonique 1 et d'une unité électronique de commande 2 associée.

Dans le cas général, la matrice 1 possède plusieurs entrées et plusieurs sorties, par exemple 16 entrées et 16 sorties. Toutefois, pour des raisons de clarté, seulement deux entrées Q, Q' et deux sorties R, R' ont été représentées. Les entrées Q, Q' sont prévues pour recevoir des signaux optiques WDM d'entrée We, We', tandis que les sorties R, R' fournissent des signaux optiques WDM de sortie Ws, Ws'. Les signaux We, We' sont constitués chacun de plusieurs composantes spectrales pouvant être portées respectivement par n longueurs d'onde d'entrée λ1-λn attribuées à n canaux spectraux. De même les signaux Ws, Ws' sont formés de composantes spectrales pouvant être portées respectivement par p longueurs d'onde de sortie λ'1-λ'p. Généralement toutes ces longueurs d'onde font partie d'un même ensemble de ressources spectrales et on aura p = n.

La matrice possédant généralement autant d'entrées que de sorties, elle peut dans ce cas être organisées en modules, tel que 3, 3', associés chacun à une entrée et une sortie.

Ainsi, les signaux We, We' sont couplés respectivement d'une part aux modules 3, 3' par l'intermédiaire de lignes à retard réglables DL, DL', et d'autre part à des interfaces de conversion optique-électrique OE, OE' de l'unité de commande 2 par l'intermédiaire de démultiplexeurs De, De'.

La matrice de commutation 1 comporte, couplés en cascade, des ensembles de lignes à retard 5 appartenant chacun à un des modules 3, 3', un commutateur spatial 6 de type "cross-bar" commun, des étages de sélection spectrale 7, des étages de réallocation spectrale 8 et des étages de couplage de sortie 4 appartenant chacun à un des modules.

L'unité électronique de commande 2 comporte une unité de traitement 9 reliée d'une part aux sorties des interfaces de conversion optique-électrique OE, OE' et d'autre part à un circuit de contrôle 10.

L'unité de traitement 9 a d'abord pour fonction de décoder les différents en-têtes des paquets reçus pour en extraire les destinations respectives. En fonction de ces informations de destination élaborées par des choix imposés par une table de routage, l'unité 9 gére alors les éventuels conflits. Ainsi, pour chaque paquet reçu porté par chaque longueur d'onde, l'unité 9 détermine vers quel port de sortie de la matrice et à quel moment le paquet doit être dirigé. Ces informations de routage sont transmises au circuit de contrôle 10 qui envoie alors des signaux de commande appropriés au commutateur spatial 6 et aux étages de sélection spectrale 7.

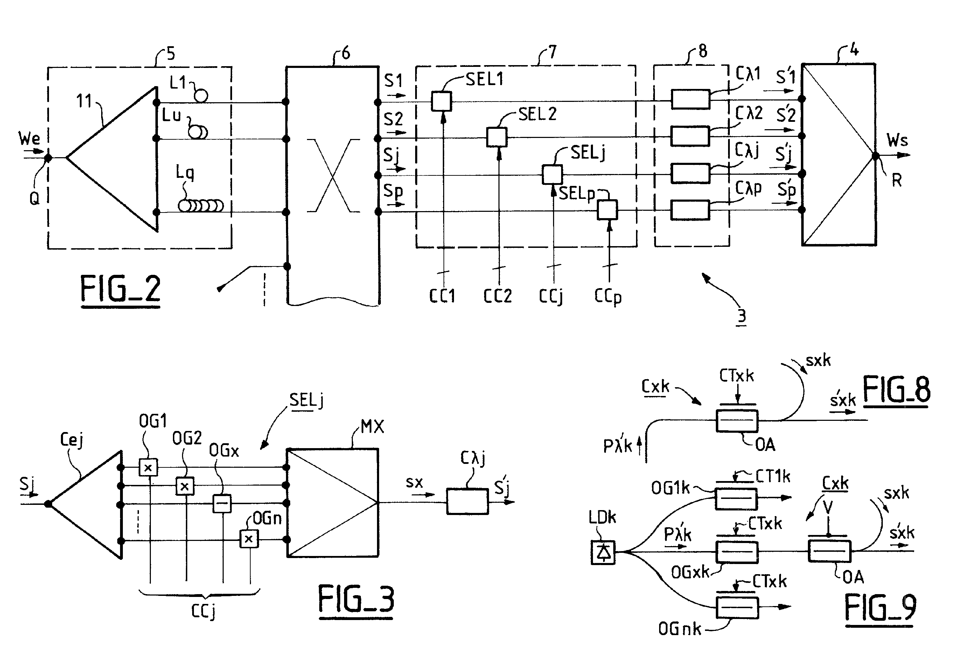

La figure 2 montre plus en détail l'un des modules 3 de la matrice 1 selon l'état de la technique. L'ensemble 5 est essentiellement constitué de q lignes à retard L1, Lu, Lq de longueurs différentes et dimensionnées chacune pour créer un retard multiple entier du temps de transmission d'un paquet. Chaque ligne à retard reçoit le multiplex d'entrée We associé au module, par l'intermédiaire d'un coupleur diffuseur 11.

Les sorties des q lignes à retard sont couplées respectivement à q entrées du commutateur spatial commun 6.

L'étage de sélection spectrale 7 est composé de p sélecteurs de longueur d'onde SEL1, SEL2, SELj, SELp commandés respectivement par des signaux de commande CC1, CC2, CCj, CCp issus du circuit de contrôle 10.

Les entrées des p sélecteurs sont couplées respectivement à p sorties du commutateur spatial 6 fournissant les signaux S1, S2, Sj, Sp. Les sélecteurs SEL1, SEL2, SELj, SELp sont reliées respectivement à p convertisseurs de longueur d'onde Cλ1, Cλ2, Cλj, Cλp constituant l'étage de réallocation spectrale 8. Ces convertisseurs fournissent en sorties les signaux S'1, S'2, S'j, S'p qui sont appliqués à des entrées correspondantes de l'étage de couplage de sortie 4.

La dimension spectral des signaux est donc prise en compte par l'étage de sélection spectrale 7 et l'étage de réallocation spectrale 8. Ainsi, chaque signal Sj issu d'une sortie du commutateur 6 est traité par un dispositif de sélection et de conversion de longueur d'onde SELj, Cλj d'un des modules 3 avant d'être injecté dans le l'étage de couplage de sortie 4 de ce module.

Ainsi, en fonction de l'état du commutateur spatial 6 et des longueurs d'onde sélectionnées par les différents sélecteurs, chaque paquet appartenant à un multiplex d'entrée quelconque et porté par une longueur d'onde quelconque peut, après un retard approprié, être aiguillé vers une sortie quelconque de la matrice et être porté en sortie par une nouvelle longueur d'onde.

La fonction de sélection réalisée par chaque sélecteur SELj consiste à extraire du signal WDM Sj reçu du commutateur 6 un signal porté par une seule des longueurs d'onde affectées aux canaux spectraux du signal WDM. Les convertisseurs de longueur d'onde Cλ1-Cλp d'un même module 3 ont pour fonction de faire porter les signaux ainsi extraits par de nouvelles longueurs d'onde λ'1-λ'p fixées et différentes entre elles de façon à pouvoir être à nouveau combinées au moyen de l'étage de couplage 4 pour constituer le signal WDM de sortie Ws. L'étage de couplage 4 peut être constitué d'un multiplexeur dont les entrées sont accordées sur des longueurs d'onde imposées respectivement par les convertisseurs de longueur d'onde.

La figure 3 représente une réalisation connue d'un dispositif de sélection et de conversion de longueur d'onde SELj, Cλj associé à une des sorties du commutateur 6.

Le dispositif de sélection SELj comporte un coupleur d'entrée Cej de type diffuseur à une entrée et n sorties qui sont couplées respectivement à n entrées d'un multiplexeur MX par l'intermédiaire de n portes optiques OG1, OG2, OGx, OGn commandées électriquement par les signaux CCj. La sortie du multiplexeur MX est couplée à l'entrée du convertisseur de longueur d'onde Cλj.

En fonctionnement, le coupleur d'entrée Cej reçoit le signal WDM Sj et les portes optiques reçoivent des signaux de commande CCj tels qu'une seule des portes, par exemple OGx, soit passante. Ainsi, seule l'entrée du multiplexeur MX qui est couplée à la porte OGx reçoit le signal Sj et, compte tenu de la fonction de filtrage des multiplexeurs, seule la longueur d'onde, par exemple λx, qui est en accord avec cette entrée est transmise à la sortie du multiplexeur MX. Le multiplexeur fournit alors au convertisseur Cλj un signal sx qui appartient au canal spectral à la longueur d'onde λx. En fonction du signal sx ainsi sélectivement extrait, le convertisseur Cλj délivre le signal converti S'j porté par la longueur d'onde λ'j imposée par ce convertisseur.

Comme déjà indiqué, la matrice décrite ci-dessus permet pendant chaque temps paquet de coupler par l'intermédiaire d'une ligne à retard choisie, par exemple Lu, un multiplex d'entrée donné, par exemple We, à l'une des entrées d'un étage de sélection spectrale 7 associé à l'une des sorties R de la matrice. Il est donc possible de transférer sur une sortie quelconque choisie un paquet choisi appartenant à un canal spectral choisi d'un multiplex d'entrée choisi. Néanmoins cette réalisation ne permet pas de transférer sur une même sortie pendant un même temps paquet plusieurs paquets synchrones en entrée et appartenant à un même multiplex d'entrée.

Cette impossibilité implique qu'un commutateur réalisé conformément à cette architecture n'offre pas une performance optimale soit en terme de taux de pertes de paquets, soit en terme de délai de transfert de paquets.

L'invention a pour but de remédier à cet inconvénient en proposant un dispositif de sélection et de conversion de longueur d'onde qui permette le transfert sur une même sortie de plusieurs paquets synchrones en entrée, appartenant à un même multiplex d'entrée et subissant un même retard.

Dans ce but, l'invention a pour objet un dispositif de sélection et de conversion de longueur d'onde pour n composantes spectrales d'un signal d'entrée multiplexé en longueurs d'onde, lesdites n composantes spectrales étant identifiées respectivement par n longueurs d'onde porteuses d'entrée, caractérisé en ce qu'il comporte :
- des moyens de démultiplexage et de diffusion prévus pour prélever du signal d'entrée p parties de chaque composante spectrale et former ainsi n.p signaux extraits séparés spatialement,
- associés à chaque composante spectrale, p dispositifs de conversion de longueur d'onde recevant respectivement lesdits p signaux extraits de ladite composante spectrale associée, et aptes à fournir p signaux convertis fonction respectivement desdits p signaux extraits, lesdits p signaux convertis étant portés respectivement par p longueurs d'onde de sortie de valeurs distinctes prédéterminées, chaque dispositif de conversion ayant une fonction de porte optique, et
- des moyens de couplage de sortie disposés de façon à coupler les sorties desdits dispositifs de conversion de longueur d'onde sur un port de sortie commun.

Grâce à cette disposition, le signal issu du dispositif peut être un multiplex WDM comportant des paquets synchrones portant les informations de paquets synchrones d'un même signal WDM d'entrée de la matrice.

L'invention a aussi pour objet plusieurs modes de réalisation concernant les moyens de démultiplexage et de diffusion ainsi que les moyens de couplage de sortie.

Selon une première possibilité de réalisation des moyens de démultiplexage et de diffusion, ceux-ci comportent
- un coupleur d'entrée apte à fournir sur p sorties p parties du signal d'entrée, et
- p démultiplexeurs d'entrée comprenant chacun une entrée (A) et n sorties, les entrées desdits démultiplexeurs d'entrée étant couplées respectivement auxdites sorties dudit coupleur d'entrée, chacun desdits démultiplexeurs d'entrée étant apte à fournir sur ses sorties n signaux extraits respectivement desdites n composantes spectrales.

Selon une variante, les moyens de démultiplexage et de diffusion comportent :
- un démultiplexeur d'entrée apte à fournir sur n sorties lesdites n composantes spectrales du signal d'entrée, et
- n coupleurs d'entrée comprenant chacun une entrée et p sorties, les entrées desdits coupleurs d'entrée étant couplées respectivement auxdites sorties du démultiplexeur d'entrée.

Selon une première possibilité de réalisation des moyens de couplage de sortie, ceux-ci comportent :
- p coupleurs de sortie associés respectivement auxdites longueurs d'onde de sortie et comprenant chacun une sortie et n entrées disposées pour recevoir respectivement des signaux convertis portés par ladite longueur d'onde de sortie associée, et
- un multiplexeur de sortie comprenant une sortie et p entrées accordées respectivement sur lesdites p longueurs d'onde de sortie et couplées respectivement aux sorties des coupleurs de sortie associés respectivement auxdites longueurs d'onde de sortie.

Selon une variante, les moyens de couplage de sortie comportent :
- n multiplexeurs de sortie comprenant chacun une sortie et p entrées accordées respectivement sur lesdites p longueurs d'onde de sortie et disposées pour recevoir respectivement des signaux convertis portés respectivement par lesdites longueurs d'onde de sortie, et
- un coupleur de sortie comprenant une sortie et n entrées couplées respectivement aux sorties desdits multiplexeurs de sortie.

Les choix de réalisation des moyens de démultiplexage et de diffusion et des moyens de couplage de sortie parmi ceux indiqués ci-dessus ont des conséquences sur les propriétés du dispositif relatives aux aspects suivants :
- coût de fabrication selon la complexité et le nombre des composants constitutifs;
- possibilité d'amplification des signaux convertis;
- possibilité d'intégration de l'ensemble.

Selon un autre aspect de réalisation conforme à l'invention, chaque dispositif de conversion de longueur d'onde comprend un amplificateur optique semi-conducteur utilisé comme porte optique et recevant d'une part un desdits signaux extraits et d'autre part une onde de sonde ayant une desdites longueurs d'onde déterminées, un signal converti étant ladite onde de sonde amplifiée par ledit amplificateur avec un gain fonction de la puissance optique dudit signal extrait qu'il reçoit.

L'avantage de cette réalisation est qu'un seul composant, l'amplificateur optique semi-conducteur, joue à la fois le rôle de porte optique et de convertisseur de longueur d'onde.

Avantageusement, chaque amplificateur est dimensionné pour présenter un gain maximum à la longueur d'onde du signal extrait qu'il reçoit.

L'invention a également pour objet une matrice de commutation photonique comportant le dispositif selon l'invention.

D'autres aspects et avantages de l'invention apparaîtront dans la suite de la description en référence aux figures.
- La figure 1 représente un exemple de commutateur optique, déjà commenté précédemment.
- La figure 2 représente l'un des modules constitutifs d'une matrice de commutation photonique, également commenté précédemment.
- La figure 3 représente une réalisation connue d'un dispositif de sélection et de conversion de longueur d'onde, également commenté précédemment.
- La figure 4 représente un schéma de principe d'un dispositif de sélection et de conversion de longueur d'onde selon l'invention.
- La figure 5 représente un premier mode de réalisation du dispositif selon l'invention.
- La figure 6 représente un second mode de réalisation du dispositif selon l'invention.
- La figure 7 représente un troisième mode de réalisation du dispositif selon l'invention.
- Les figure 8 et 9 représentent des exemples de réalisation de dispositifs de conversion de longueur d'onde utilisés pour une mise en oeuvre de l'invention.

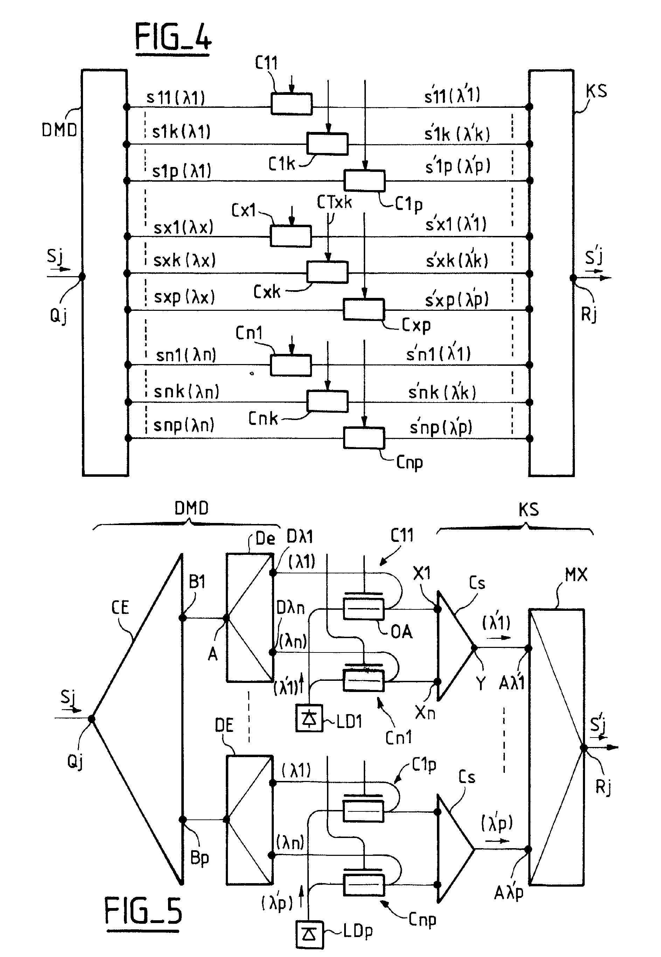

Le dispositif de sélection et de conversion de longueur d'onde représenté par le schéma de principe de la figure 4 est prévu pour recevoir un signal d'entrée WDM Sj comportant n composantes spectrales identifiées respectivement par n longueurs d'onde porteuses d'entrée λ1, ...λx, ...λn. Le dispositif est d'autre part prévu pour fournir un signal WDM de sortie S'j comportant au plus p composantes spectrales identifiées respectivement par p longueurs d'onde porteuses de sortie λ'1, ...λ'k, ...λ'p.

Le dispositif comporte des moyens de démultiplexage et de diffusion DMD muni d'un port d'entrée Qj recevant le signal Sj et de n.p sorties couplées respectivement à n.p entrées correspondantes de moyens de couplage de sortie KS, par l'intermédiaire de n.p convertisseurs de longueur d'onde C11-Cnp. Le port de sortie Rj des moyens de couplage de sortie KS délivre le signal de sortie S'j.

Les moyens de démultiplexage et de diffusion DMD sont prévus pour extraire du signal Sj n.p signaux s11-snp définis comme suit. Pour chaque longueur d'onde d'entrée, par exemple λx, DMD fournit les signaux sx1, ..., sxk, ..., sxp qui sont respectivement p parties de la composante spectrale du signal Sj, portée par la longueur d'onde porteuse d'entrée λx.

Chaque signal extrait, par exemple sxk est appliqué à l'entrée d'un convertisseurs de longueur d'onde correspondant Cxk apte à fournir un signal converti s'xk fonction du signal sxk et porté par une longueur d'onde de sortie λ'k. Pour une même longueur d'onde d'entrée, par exemple λx, il est prévu p dispositif de conversion Cx1, ...Cxk, ...Cxp, aptes à délivrer p signaux convertis s'x1, ...s'xk, ...s'xp portés respectivement par p longueurs d'onde de sortie λ'1, ...λ'k, ...λ'p de valeurs distinctes.

Chaque convertisseur de longueur d'onde, par exemple Cxk, a en outre une fonction de porte optique commandée par un signal de commande associé CTxk.

En fonctionnement, les signaux de commande (symbolisés par des flèches non référencées) appliqués aux convertisseurs sont tels qu'au plus un parmi les convertisseurs recevant les signaux extraits d'une même composante spectrale soit actif. Par exemple, pour convertir la longueur d'onde d'entrée λx à la longueur d'onde λ'k, parmi les convertisseurs Cx1, ...Cxk, ...Cxp recevant les signaux sx1, ...,sxk, ...,sxp, seul le convertisseur Cxk sera activé par le signal de commande CTxk.

Au plus p signaux convertis parmi s'11-s'np fournis par les convertisseurs ainsi sélectivement activés sont ensuite combinés par les moyens de couplage de sortie KS.

En pratique, l'ensemble des longueurs d'onde d'entrée λ1-λn et de sortie λ'1-λ'p feront généralement partie d'un même ensemble de ressources spectrales allouées au réseau, mais il n'est pas nécessaire qu'elles soient identiques ni que l'on ait n = p.

Les figures 8 et 9 représentent deux variantes de réalisation des convertisseurs de longueur d'onde. Chaque convertisseur, tel que Cxk représenté sur les figures, est réalisé au moyen d'un amplificateur optique semi-conducteur OA utilisé à la fois comme porte optique et comme convertisseur de longueur d'onde.

De façon connue en soi, l'amplificateur OA est utilisé pour fonctionner en régime de modulation croisée de gain. Il reçoit d'une part le signal à convertir et d'autre part une onde de sonde fournie par une source laser. Il délivre alors un signal converti porté par la longueur d'onde de l'onde de sonde modulée en inverse de la modulation du signal à convertir. Ainsi par exemple le convertisseur Cxk reçoit le signal extrait sxk et l'onde de sonde Pλ'k à la longueur d'onde λ'k et fournit en sortie le signal converti correspondant s'xk porté par λ'k.

L'onde de sonde Pλ'k et le signal extrait sxk injectés dans l'amplificateur OA ont ici des sens de propagation opposés. Bien que non indispensable, cette disposition limite les contraintes de filtrage au niveau des moyens de couplage de sortie KS.

Selon la variante de la figure 8, on réalise la fonction de porte optique de l'amplificateur OA en agissant sur sa tension d'alimentation.

Selon la variante de la figure 9, l'onde de sonde Pλ'k est injectées dans l'amplificateur OA par l'intermédiaire d'une porte optique commandée OGxk. On réalise alors la fonction de porte optique de l'amplificateur OA en agissant sur la tension de commande de la porte

Selon cette réalisation, les amplificateurs OA (non représentés) des convertisseurs C1k, ...Cxk, ...Cnk prévus pour fournir des signaux convertis portés par la même longueur d'onde λ'k sont couplés à une source laser commune LDk par l'intermédiaire respectivement des portes optiques OG1k,...OGxk,...OGnk parmi lesquelles une seule au plus sera sélectivement activée.

En permettant de séparer spatialement les fonctions de commande électriques des fonctions optiques, cette variante présente l'avantage de faciliter l'intégration des parties optiques de plusieurs dispositifs pour réaliser une matrice intégrée complète.

Pour optimiser la réalisation, chaque amplificateur sera dimensionné pour présenter un gain maximum à la longueur d'onde du signal extrait qu'il reçoit. Ceci peut être obtenu de façon bien connue des fabricants de composants optiques par un choix approprié de la composition de la couche active de chaque amplificateur ainsi que de sa géométrie.

La figure 5 représente un premier mode de réalisation du dispositif selon l'invention.

Selon cette réalisation, les moyens de démultiplexage et de diffusion DMD comportent :
- un coupleur d'entrée CE apte à fournir sur p sorties B1-Bp p parties du signal d'entrée Sj, et
- p démultiplexeurs d'entrée De comprenant chacun une entrée A et n sorties Dλ1-Dλn, les entrées des démultiplexeurs d'entrée De étant couplées respectivement aux sorties B1-Bp du coupleur d'entrée CE, chacun des démultiplexeurs d'entrée De étant apte à fournir sur ses sorties Dλ1-Dλn n signaux s1k-snk extraits respectivement des n composantes spectrales λ1-λn.

Par ailleurs, les moyens de couplage de sortie KS comportent :
- p coupleurs de sortie Cs associés respectivement aux longueurs d'onde de sortie λ'1-λ'p et comprenant chacun une sortie Y et n entrées X1-Xn disposées pour recevoir respectivement des signaux convertis s'1k-s'nk portés par la longueur d'onde de sortie λ'k associée, et
- un multiplexeur de sortie MX comprenant une sortie Rj et p entrées Aλ'1-Aλ'p accordées respectivement sur les p longueurs d'onde de sortie λ'1-λ'p et couplées respectivement aux sorties Y des coupleurs de sortie Cs associés respectivement aux longueurs d'onde de sortie λ'1-λ'p.

Les n sorties Dλ1-Dλn de chaque démultiplexeur d'entrée De sont couplées respectivement aux n entrées X1-Xn d'un des coupleurs de sortie Cs par l'intermédiaire des convertisseurs de longueur d'onde. Ils sont réalisés ici au moyen d'amplificateurs optiques semi-conducteurs OA recevant chacun d'une des sources laser LD1-LDp une onde de sonde ayant la longueur d'onde λ'1-λ'p associée au démultiplexeur d'entrée.

Dans le cas où les signaux convertis doivent être amplifiés, cette solution présente l'avantage d'être la mieux adaptée à une réalisation intégrée, tout en permettant l'amplification à moindre coût. En effet, les sorties de chaque démultiplexeur d'entrée sont couplées à des convertisseurs de longueur d'onde prévus pour fournir des signaux convertis ayant une même longueur d'onde et ces signaux convertis sont reçus par un même coupleur de sortie Cs. Ainsi, tout signal délivré par la sortie Y de chaque coupleur de sortie Cs a toujours une même longueur d'onde. Il est donc possible de placer en aval de chaque coupleur de sortie Cs un simple amplificateur à bande étroite centrée sur la longueur d'onde associée. Comme par ailleurs la topologie des guides de liaison entre les composants du dispositif est simple, une intégration de l'ensemble s'en trouve facilitée.

Par ailleurs, l'utilisation en sortie d'un multiplexeur MX au lieu d'un simple coupleur permet de réduire en sortie le bruit engendré par les amplificateurs.

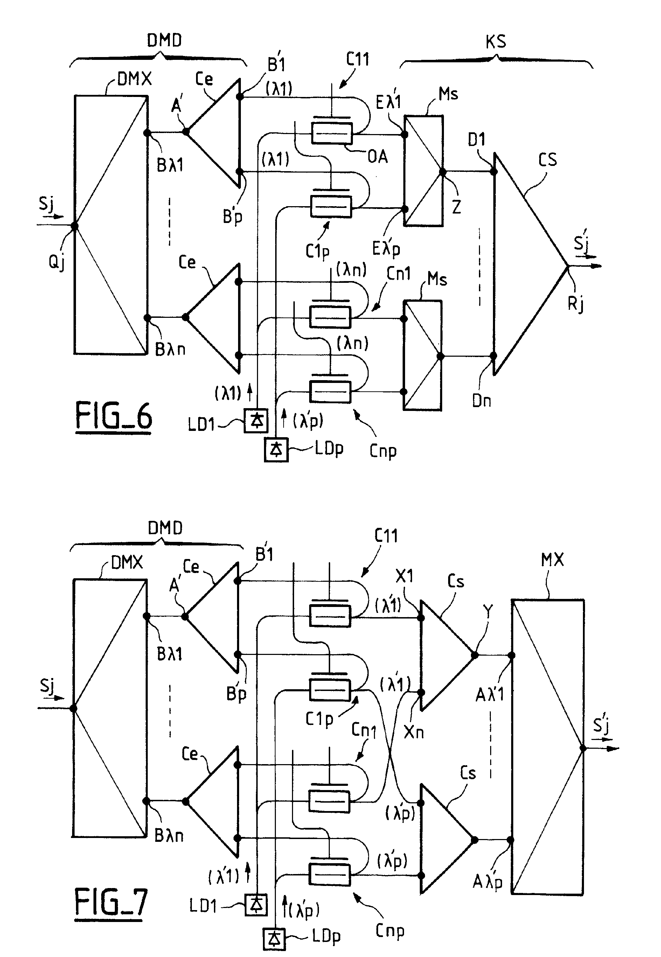

La figure 6 représente une variante de réalisation du dispositif selon l'invention.

Selon cette variante, les moyens de démultiplexage et de diffusion DMD comportent
- un démultiplexeur d'entrée DMX apte à fournir sur n sorties Bλ1-Bλn les n composantes spectrales λ1-λn du signal d'entrée Sj, et
- n coupleurs d'entrée Ce comprenant chacun une entrée A' et p sorties B'1-B'p, les entrées des coupleurs d'entrée étant couplées respectivement aux sorties Bλ1-Bλn du démultiplexeur d'entrée DMX.

Par ailleurs, les moyens de couplage de sortie KS comportent :
- n multiplexeurs de sortie Ms comprenant chacun une sortie Z et p entrées Eλ'1-Eλ'p accordées respectivement sur les p longueurs d'onde de sortie λ'1-λ'p et disposées pour recevoir respectivement des signaux convertis s'x1-s'xp portés respectivement par les longueurs d'onde de sortie λ'1-λ'p, et
- un coupleur de sortie CS comprenant une sortie Rj et n entrées D1-Dn couplées respectivement aux sorties Z des multiplexeurs de sortie Ms.

Les p sorties B'1-B'p de chaque coupleur d'entrée Ce sont couplées respectivement aux p entrées Eλ'1-Eλ'p d'un des multiplexeurs de sortie Ms par l'intermédiaire de convertisseurs de longueur d'onde. Ils sont réalisés au moyen d'amplificateurs optiques semi-conducteurs OA recevant respectivement des sources laser LD1-LDp des ondes de sonde ayant respectivement les longueurs d'onde λ'1-λ'p.

Par rapport à la première solution, cette alternative ne nécessite qu'un seul démultiplexeur 1 vers n, mais elle est moins favorable à une amplification économique car il faut prévoir en sortie des multiplexeurs de sortie Ms des amplificateurs à plus large bande pour couvrir l'ensemble des longueurs d'onde λ'1-λ'p.

Une autre variante de réalisation est représentée à la figure 7. Les moyens de démultiplexage et de diffusion DMD sont identiques à ceux de la figure 6 et les moyens de couplage de sortie KS sont identiques à ceux de la figure 5.

Les p sorties B'1-B'p de chaque coupleur d'entrée Ce sont couplées respectivement à des entrées de coupleurs de sortie Cs différents par l'intermédiaire de convertisseurs de longueur d'onde choisis de sorte que chaque coupleurs de sortie Cs ne puisse recevoir que des signaux convertis portés par une même longueur d'onde de sortie associée.

Cette solution présente l'avantage de ne nécessiter qu'un seul démultiplexeur d'entrée DMX et un seul multiplexeur de sortie MX. De plus elle est favorable à une amplification économique des signaux convertis. Par contre, elle n'est bien adaptée qu'à réalisation hybride utilisant des fibres pour l'interconnexion entre les convertisseurs et les coupleurs de sortie.

Comme déjà décrit en référence aux figures 1 et 2, la matrice de commutation photonique 1 selon l'invention comporte un ou plusieurs ensemble(s) 5 de lignes à retard, un commutateur spatial 6, un ou plusieurs étage(s) de sélection spectrale 7 et un ou plusieurs étage(s) de réallocation spectrale 8. Selon l'invention, les étages de sélection spectrale 7 et de réallocation spectrale 8 comportent des dispositifs de sélection et de conversion de longueur d'onde tels que décrits en référence aux figures 4 à 7.

Il convient de noter que les étages de couplage de sortie 4 décrits précédemment en référence à la figure 2 ne peuvent plus être constitués de multiplexeurs car les signaux S'1, ...S'j, ...S'p qu'ils doivent combiner sont chacun des multiplex de longueurs d'onde.

## Revendications

1. Dispositif de sélection et de conversion de longueur d'onde pour n composantes spectrales d'un signal d'entrée (Sj) multiplexé en longueurs d'onde, lesdites n composantes spectrales étant identifiées respectivement par n longueurs d'onde porteuses d'entrée (λ1, λx, λn), **caractérisé en ce qu'**il comporte :
- des moyens de démultiplexage et de diffusion (DMD) prévus pour prélever du signal d'entrée (Sj) p parties de chaque composante spectrale (λx) et former ainsi n.p signaux extraits (s11-snp) séparés spatialement,
- associés à chaque composante spectrale (λx), p dispositifs de conversion de longueur d'onde (Cx1, Cxk, Cxp) recevant respectivement lesdits p signaux extraits (sx1-sxp) de ladite composante spectrale associée (λx), et aptes à fournir p signaux convertis (s'x1-s'xp) fonction respectivement desdits p signaux extraits (sx1-sxp), lesdits p signaux convertis (s'x1-s'xp) étant portés respectivement par p longueurs d'onde de sortie (λ'1-λ'p) de valeurs distinctes prédéterminées, chaque dispositif de conversion (Cxk) ayant une fonction de porte optique, et
- des moyens de couplage de sortie (KS) disposés de façon à coupler les sorties desdits dispositifs de conversion de longueur d'onde (C11-Cnp) sur un port de sortie commun (Rj).

2. Dispositif selon la revendication 1, **caractérisé en ce que** lesdits moyens de démultiplexage et de diffusion (DMD) comportent :
- un coupleur d'entrée (CE) apte à fournir sur p sorties (B1-Bp) p parties du signal d'entrée (Sj), et
- p démultiplexeurs d'entrée (De) comprenant chacun une entrée (A) et n sorties (Dλ1-Dλn), les entrées desdits démultiplexeurs d'entrée (De) étant couplées respectivement auxdites sorties (B1-Bp) dudit coupleur d'entrée (CE), chacun desdits démultiplexeurs d'entrée (De) étant apte à fournir sur ses sorties (Dλ1-Dλn) n signaux (s1k-snk) extraits respectivement desdites n composantes spectrales (λ1-λn).

3. Dispositif selon la revendication 1, **caractérisé en ce que** lesdits moyens de démultiplexage et de diffusion (DMD) comportent :
- un démultiplexeur d'entrée (DMX) apte à fournir sur n sorties (Bλ1-Bλn) lesdites n composantes spectrales (λ1-λn) du signal d'entrée (Sj), et
- n coupleurs d'entrée (Ce) comprenant chacun une entrée (A') et p sorties (B'1-B'p), les entrées desdits coupleurs d'entrée étant couplées respectivement auxdites sorties (Bλ1-Bλn) du démultiplexeur d'entrée (DMX).

4. Dispositif selon l'une des revendications 1 à 3, **caractérisé en ce que** lesdits moyens de couplage de sortie (KS) comportent :
- p coupleurs de sortie (Cs) associés respectivement auxdites longueurs d'onde de sortie (λ'1-λ'p) et comprenant chacun une sortie (Y) et n entrées (X1-Xn) disposées pour recevoir respectivement des signaux convertis (s'1k-s'nk) portés par ladite longueur d'onde de sortie (λ'k) associée, et
- un multiplexeur de sortie (MX) comprenant une sortie (Rj) et p entrées (Aλ'1-Aλ'p) accordées respectivement sur lesdites p longueurs d'onde de sortie (λ'1-λ'p) et couplées respectivement aux sorties (Y) des coupleurs de sortie (Cs) associés respectivement auxdites longueurs d'onde de sortie (λ'1-λ'p).

5. Dispositif selon l'une des revendications 1 à 3, **caractérisé en ce que** lesdits moyens de couplage de sortie (KS) comportent :
- n multiplexeurs de sortie (Ms) comprenant chacun une sortie (Z) et p entrées (Eλ'1-Eλ'p) accordées respectivement sur lesdites p longueurs d'onde de sortie (λ'1-λ'p) et disposées pour recevoir respectivement des signaux convertis (s'x1-s'xp) portés respectivement par lesdites longueurs d'onde de sortie (λ'1-λ'p), et
- un coupleur de sortie (CS) comprenant une sortie (Rj) et n entrées (D1-Dn) couplées respectivement aux sorties (Z) desdits multiplexeurs de sortie (Ms).

6. Dispositif selon l'une des revendications 1 à 5, **caractérisé en ce que** chaque dispositif de conversion de longueur d'onde (Cxk) comprend un amplificateur optique semi-conducteur (OA) utilisé comme porte optique et recevant d'une part un desdits signaux extraits (sxk) et d'autre part une onde de sonde (Pλ'k) ayant une desdites longueurs d'onde déterminées (λ'k), un signal converti (s'xk) étant ladite onde de sonde (Pλ'k) amplifiée par ledit amplificateur (OA) avec un gain fonction de la puissance optique dudit signal extrait (sxk) qu'il reçoit.

7. Dispositif selon la revendication 6, **caractérisé en ce que** chaque amplificateur (OA) est dimensionné pour présenter un gain maximum à la longueur d'onde du signal extrait (sxk) qu'il reçoit.

8. Dispositif selon l'une des revendications 6 ou 7, **caractérisé en ce que** ladite onde de sonde (Pλ'k) et ledit signal extrait (sxk) injectés dans ledit amplificateur (OA) ont des sens de propagation opposés.

9. Dispositif selon l'une des revendications 6 à 8, **caractérisé en ce que** la fonction de porte optique des amplificateurs (OA) est réalisée par une application sélective de tensions d'alimentation (CTxk) sur lesdits amplificateurs (OA).

10. Dispositif selon l'une des revendications 6 à 8, **caractérisé en ce que** la fonction de porte optique des amplificateurs (OA) est réalisée par une injection sélective desdites ondes de sonde (Pλ'k) dans lesdits amplificateurs (OA).

11. Matrice de commutation photonique comportant, couplés en cascade, au moins un ensemble (5) de lignes à retard, un commutateur spatial (6), au moins un étage de sélection spectrale (7) et au moins un étage de réallocation spectrale (8), **caractérisé en ce que** ledit ou lesdits étage(s) de sélection spectrale (7) et de réallocation spectrale (8) comportent des dispositifs de sélection et de conversion de longueur d'onde conformes à l'une des revendications 1 à 10.
